Europäisches Patentamt

European Patent Office

Office européen des brevets

(19)

(11) Publication number: **0 169 473**
**B1**

# EUROPEAN PATENT SPECIFICATION

(12)

(45) Date of publication of patent specification: **20.09.89**

(51) Int. Cl.⁴: **B 25 J 9/04,** F 16 H 7/12

(21) Application number: **85108858.3**

(22) Date of filing: **16.07.85**

(54) Manipulator Drive System.

(30) Priority: **27.07.84 US 635375**

(43) Date of publication of application:
**29.01.86 Bulletin 86/05**

(45) Publication of the grant of the patent:
**20.09.89 Bulletin 89/38**

(84) Designated Contracting States:
**DE FR GB IT SE**

(56) References cited:
**EP-A-0 086 054**
**FR-A-2 427 199**
**GB-A-2 022 047**
**GB-A-2 086 002**
**US-A-2 954 726**
**US-A-4 392 776**

(73) Proprietor: **UNIMATION INC.**
**Shelter Rock Lane**
**Danbury Connecticut 06810 (US)**

(72) Inventor: **Garin, John**
**131 Mt. Lebanon Blvd.**
**Pittsburgh Pennsylvania 15228 (US)**

(74) Representative: **Patentanwälte Dipl.-Ing. R.**
**Holzer Dipl.-Ing. (FH) W. Gallo**
**Ludwigstrasse 26**
**D-8900 Augsburg (DE)**

Note: Within nine months from the publication of the mention of the grant of the European patent, any person may give notice to the European Patent Office of opposition to the European patent granted. Notice of opposition shall be filed in a written reasoned statement. It shall not be deemed to have been filed until the opposition fee has been paid. (Art. 99(1) European patent convention).

Courier Press, Leamington Spa, England.

## Description

### BACKGROUND OF THE INVENTION

This invention generally relates to a drive system for a manipulator apparatus, and more particularly to a drive system for what is known as a SCARA type manipulator apparatus.

The SCARA (Selective Compliance Assembly Robot Arm) type manipulator apparatus refers to an assembly robot having two jointed links pivoting about parallel vertical axes. An embodiment of the SCARA type manipulator apparatus is illustrated and described in detail in U.S. Patent 4,392,776. An embodiment disclosed in the above-referenced U.S. Patent employes a chain drive system to effect movement of the articulated arms in the XY plane. While the chain drive system represents a workable implementation of the novel manipulator apparatus, practical limitations in the chain drive system adversely affect its utilization as a commercial product. The deficiencies of the chain drive system are primarily due to stretching of the chain over a period of time coupled with the lack of adequate tensioning of the chain with respect to the drive sprockets. The stretching of the chain results in mechanical instability which is exhibited when the direction of motion of the robot arms is changed.

It is the object of the present invention to provide an improved manipulator drive system of the kind in question which overcomes the above mentioned deficiencies of a chain drive system.

### SUMMARY OF THE INVENTION

Accordingly, the invention resides in a drive system for a robotic manipulator apparatus having a primary arm rotatably supported by a base for rotation through a planar space, and a secondary arm having one end rotatably carried by the end of said primary arm opposite said base for rotation through another planar space translationary displaced from said planar space, the drive system comprising:

a) first drive means including a drive motor, a toothed gear attached to the drive shaft, a toothed gear coupled to said primary arm and a endless flexible drive member connecting said two gears,

b) a second drive means including a drive motor, a toothed gear affixed to the drive shaft, a toothed gear coupled to said secondary arm through coupling means extending through said first arm to said secondary arm for driving said secondary arm independently of said primary arm, and a endless flexible drive member connecting said two gears,

characterized in that

said endless flexible drive members of said first and second drive means are toothed belts,

first and second adjustably positioned bidirectional belt tensioning means are operatively associated with said toothed belts to control the tension of each of said belts,

each of said bidirectional belt tensioning means includes a U-shaped support member having a pair of rotatable rollers affixed at either end of said U-shaped support member and contacting the external surface of the associated belt,

each said U-shaped support member is slidably positioned relative to the respective drive shaft gear such that said gear is located within the open end of said U-shaped support member, and

adjustment means are coupled to each said U-shaped support member to position said support member relative to said gear for simultaneously positioning said rollers so as to simultaneously increasing or decreasing tension on the respective belt.

The use of toothed belts means in a manipulator drive system is non per se from EP-A-0 086 054, which document also shows a bidirectional belt tensioning device.

### BRIEF DESCRIPTION OF THE DRAWINGS

The invention will become more readily apparent from the following exemplary description to be read in conjunction with the accompanying drawing wherein:

Figure 1 is a side elevation of a SCARA type robot embodying the invention;

Fig. 2 is a top view of the side elevation of Fig. 1;

Fig. 3 is a sectioned illustration of the side elevation of Fig 1;

Fig. 4 is a sectioned illustration along the line A-A of Fig. 1;

Fig. 5 is a sectioned pictorial illustration of the primary arm of the embodiment of Fig. 1; and Fig. 6 is a top view of the primary arm of Fig. 5.

### DESCRIPTION OF THE PREFERRED EMBODIMENT

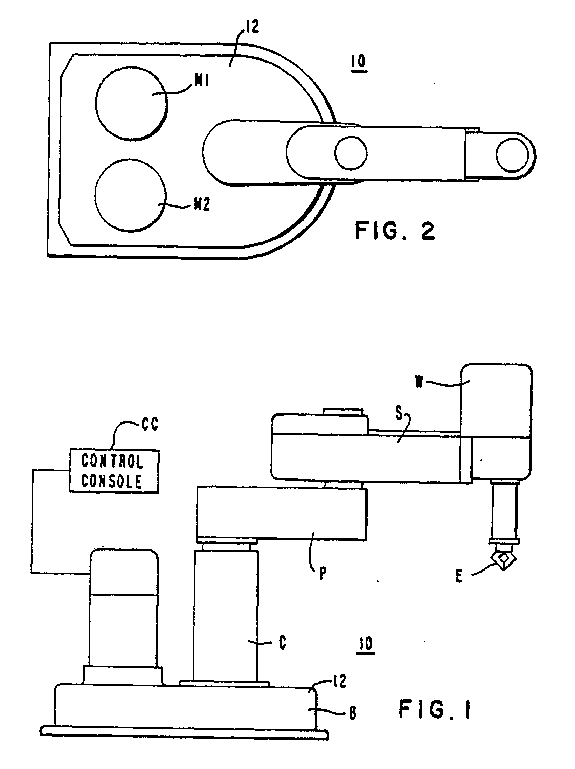

Referring to Figs. 1 and 2, there is illustrated a SCARA type robot 10 comprising a base assembly B including drive motors M1 and M2, a vertical column C supporting a primary arm assembly P, and a secondary arm assembly S. A modular wrist W in combination with an end effector E is affixed to the secondary arm assembly S. The operation of the robot 10 is controlled from the control console CC. The rotational motion of the primary arm assembly P is controlled by drive motor M1 and a drive arrangement coupling the motor M1 through the base assembly B and the column C. Drive motor M2 controls the rotational motion of the secondary arm assembly S through a drive system extending from the base assembly B through column C and the primary arm assembly P.

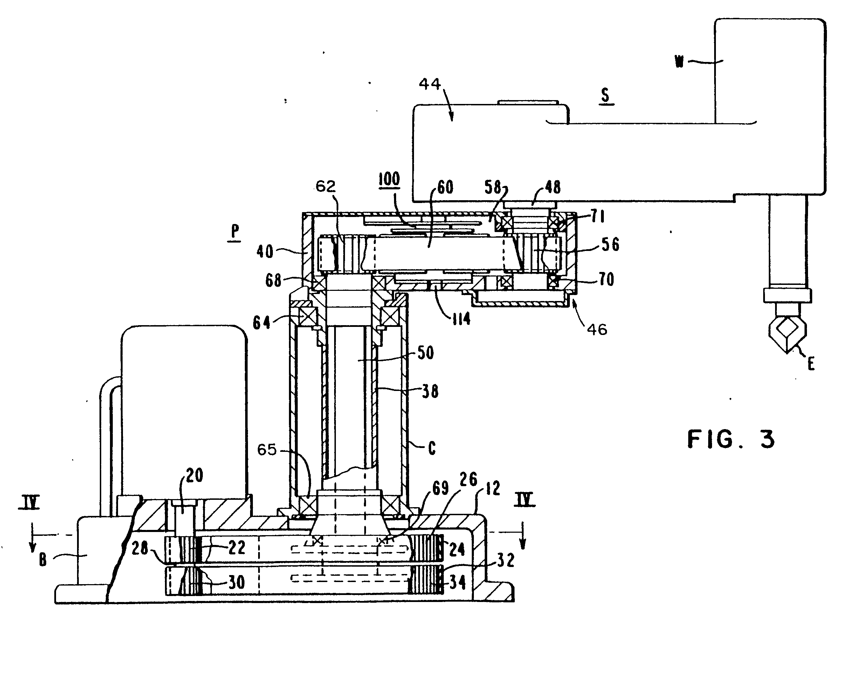

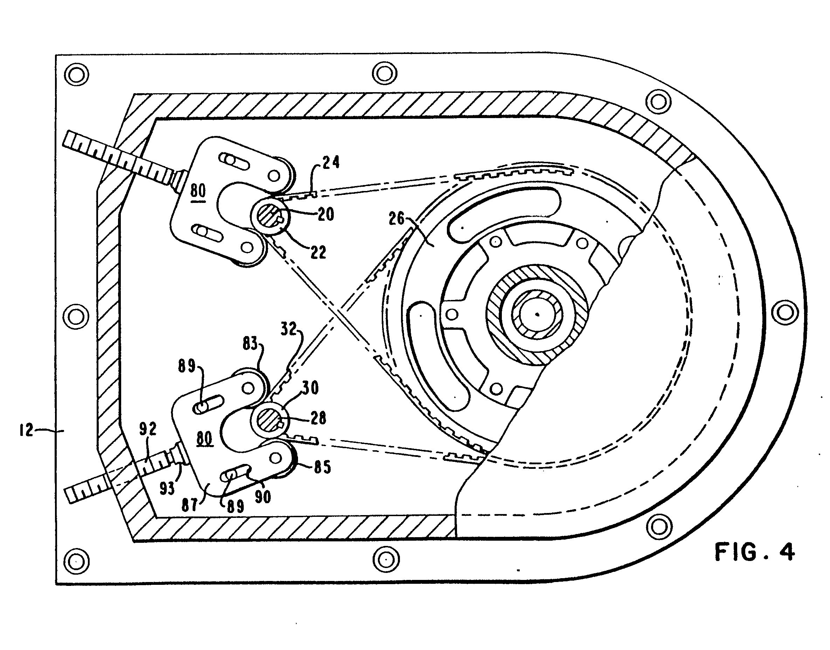

Independently operable primary and secondary arm drive assemblies employing novel belt and bidirectional tensioning arrangements in combination with the drive motora M1 and M2 are illustrated in the sectioned views of Figs. 3 and 4.

The independently operable drive motors M1 and M2 are affixed to the base plate 12 of the base drive assembly B. The drive shaft 20 for the first drive motor M1 projects through the plate 12 and is provided with a small toothed gear, or sprocket, 22 which is adapted through an endless toothed belt 24 to drive the large toothed gear, or sprocket, 26. In a similar arrangement for the drive motor M2, the drive shaft 28 carries toothed gear 30 to drive the endless toothed belt 32 and thus the other large toothed gear 34.

The primary arm assembly P is rotatably supported by the column C for horizontal rotation through a first horizontal planar space. The primary arm assembly P is generally hollow and is carried at its proximate end by the hollow shaft 38 which is extended a right angle relative to the length of the first arm and is supported from the column C. The upper end of the shaft 38 is fixed to the proximate end 40 of the primary arm assembly P while the lower end of shaft 38 is affixed to the gear 26.

The secondary arm assembly S has its proximate end 44 rotatably supported at the distal end portion 46 of the primary arm assembly P through a hollow shaft 48. The modular wrist W and associated end effector E are secured to the opposite end of the secondary arm assembly S.

The lower end of shaft 48 has driven means fixed thereto in the form of the toothed gear 56 which is in alignment with the hollow interior portion 58 of the primary arm assembly P. The secondary arm assembly S is rotatable through a horizontal plane by rotation of the toothed gear 56 coupled through an endless toothed belt 60 to toothed gear 62 fixed to the upper end of the second shaft 50. The lower end of the second shaft 50 is affixed to the large toothed gear 34, driven from the drive motor M2. The combination of the toothed gears 56 and 62, and the endless belt 60 forms a secondary arm coupling arrangement.

Each of the three hollow shafts 38, 48 and 50 are rotatably supported from their respective supporting structures by angular contact bearings. Angular contact bearings 64 and 65 function to support the first shaft 38 from the base assembly B. The angular contact bearings 68 and 69 support the second hollow shaft 50. The set of bearings 70 and 71, located at the distal end portion of the primary arm assembly P, support the third shaft 48.

The toothed belts 24, 32 and 60 are industrial quality belts consisting of elastomer rubber and a steel cable core designed to match the spring stiffness of the belts to the spring stiffness of the mechanical assembly of the robot 10.

Referring to Fig. 4, bidirectional belt tensioning devices 80 are adjustably positioned relative to the toothed gears 22 and 30 of the drive motors M1 and M2 respectively to assure proper tensioning of the belts 24 and 32. The belt tensioning devices 80 include rotatable rollers 83 and 85 secured within a U-shaped element 87 which is slideably attached to the base plate 12 via fasteners 89 which extend through the assembly slots 90. The positioning of the rollers 83 and 85 with respect to the belt and toothed gear combinations 22/24 and 30/32 is provided by a screw type positioner 92 which is threaded through the housing of the base assembly B. The positioner 92 includes a swivel foot 93 affixed to the device 80. The positioning of the rollers 83 and 85 with respect to the belt/toothed gear combinations provides not only bidirectional tensioning of the belts 24 and 32 but also serves to control the angle of engagement of the belts 24 and 32 relative to the toothed gears 22 and 30, respectively. The latter adjustment feature determines the level of surface contact between the belt and the toothed gears affixed to the drive shafts of the drive motors. Once the proper tensioning has been established through the positioning of the devices 80 by the screw type positioners 92, the devices 80 are secured in place by the fasteners 89. The proper positioning of the devices 80 is predetermined by dynamic analysis which establishes the required torque to achieve a preload in the belts 24 and 32 which will provide the required stability of the primary and secondary arm assemblies of the robot 10. The improved robot arm stability realized by the bidirectional belt tensioning devices 80 results in desired robot repeatability for a given payload supported by the end effector E.

The drive motors M1 and M2 are selected such that the rotor inertia times the gear ratio between the small. and large toothed gears is approximately equal to the dynamic inertia of the robot arm assemblies moving at maximum speed. This criteria in selecting the drive motors provides robot arm assembly stability during acceleration, deceleration and stopping.

The steel core elastomer belts also contribute to operational stability and reliability to the extent that such belts do not require lubrication, and exhibit limited mechanical stretching and wear. The material for the toothed gears is selected to exhibit the desired wear characteristics to provide robot stability and repeatability consistent with the belts. Aluminum gears have proven to be particularly reliable.

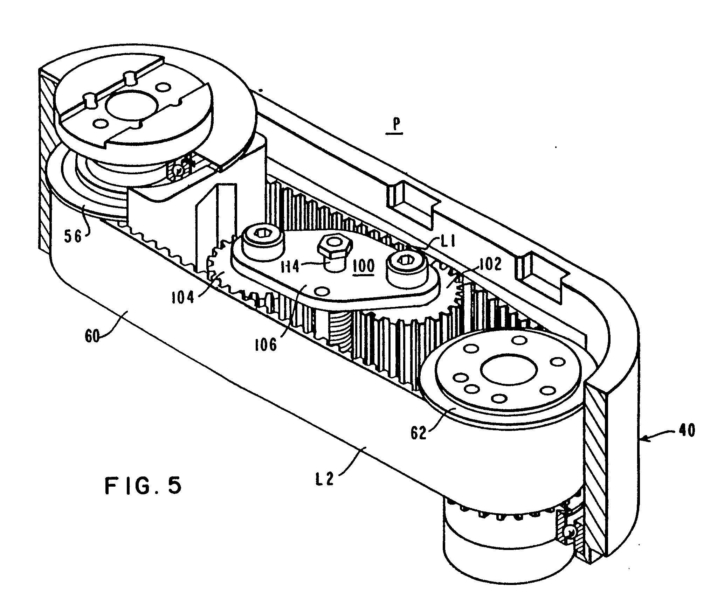

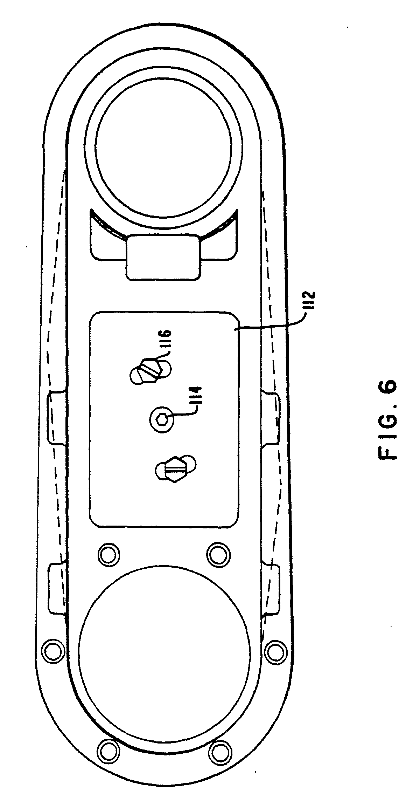

The bidirectional tensioning for the belt 60 of the secondary arm coupling arrangement positioned within the primary arm assembly P, as shown in Figures 5 and 6, is achieved by the bidirectional belt tensioning and idler device 100 positioned within the belt loop and intermediate the toothed gears 56 and 62. The device 100 includes rotatable toothed rollers, or pulleys, 102 and 104 for internal engagement with opposite lengths L1 and L2 of the belt 60 which are moving in opposite directions. The rollers 102 and 104 are connected by a yoke 106 which connects the supporting axes of the rollers. The device 100 is rotated about a torquing arrangement 110 which extends through a mounting plate 112. The torquing arrangement 110 includes an adjustable tensioning element 114 for rotating the 100 relative to the belt 60 to establish the desired tensioning of the belt 60. Once the proper tensioning is established, the device 100 is secured by the fasteners 116. The desired belt tension corresponds to a predetermined torque associated with the tensioning element 114 and thus the belt 60 can be pretensioned via the tensioning device 114 without requiring visual access to the interior of the primary arm assembly P.

## Claims

1. A drive system for a robotic manipulator apparatus having a primary arm (P) rotatably supported by a base (B) for rotation through a planar space, and a secondary arm (S) having one end rotatably carried by the end of said primary arm opposite said base for rotation through another planar space translationary displaced from said planar space, the drive system comprising:

a) first drive means including a drive motor (M1), a toothed gear (22) attached to the drive shaft (20), a toothed gear (26) coupled to said primary arm (P) and an endless flexible drive member (24) connecting said two gears,

b) a second drive means including a drive motor (M2), a toothed gear (30) affixed to the drive shaft (28), a toothed gear (34) coupled to said secondary arm (S) through coupling means (50) extending through said first arm to said secondary arm for driving said secondary arm independently of said primary arm, and an endless flexible drive member (32) connecting said two gears,

characterized in that

said endless flexible drive members of said first and second drive means are toothed belts (24, 32),

first and second adjustably positioned bidirectional belt tensioning means (80) are operatively associated with said toothed belts to control the tension of each of said belts,

each of said bidirectional belt tensioning means includes a U-shaped support member (87) having a pair of rotatable rollers (83, 85) affixed at either end of said U-shaped support member and contacting the external surface of the associated belt (24 or 32),

each said U-shaped support member (87) is slidably positioned relative to the respective drive shaft gear (22 or 30) such that said gear is located within the open end of said U-shaped support member, and

adjustment means (92, 93) are coupled to each said U-shaped support member (87) to position said support member relative to said gear for simultaneously positioning said rollers (83, 85) so as to simultaneously increasing or decreasing tension on the respective belt.

2. A drive system as claimed in claim 1, characterised in that said endless toothed belts (24, 32) are elastomer rubber belts having a steel cable core.

3. A drive system as claimed in claim 2, characterised in that said endless toothed belts (24, 32) exhibit a spring stiffness comparable to that of the mechanical structure of said robotic manipulator apparatus.

4. A drive system as claimed in any of claims 1 to 3, characterised in that said means for coupling said second drive means to said secondary arm through said primary arm includes spaced apart first and second toothed gears (56, 62) positioned in said primary arm (P) and an endless toothed belt operatively coupling said toothed gears, and an adjustable bidirectional belt tensioning means (100) positioned intermediate said first and second toothed gears and internal to said toothed belt, said tensioning means having a pair of toothed rollers (102, 104) each engaging an opposite length of said toothed belt extending between said first and second toothed gears, and adjustment means (114, 116) for adjusting said belt tensioning means to control the tension of said endless toothed belts.

## Patentansprüche

1. Antriebssystem für einen Handhabungsroboter mit einem Primärarm (P), der an einer Basis (B) drehbar gehaltert und in einer Ebene schwenkbar ist, und mit einem Sekundärarm (S), der mit seinem einen Ende drehbar an dem von der Basis abgewandten Ende des Primärarms gehaltert ist und in einer weiteren, gegenüber der genannten Ebene parallelverschobenen Ebene schwenkbar ist, wobei das Antriebssystem aufweist:

a) erste Antriebsmittel mit einem Antriebsmotor (M1), einem an der Abtriebswelle (20) befestigten Zahnrad (22), einem mit dem Primärarm (P) gekuppelten Zahnrad (26) und einem endlosen flexiblen Treibelement (24), das die beiden Zahnräder miteinander verbindet,

b) zweiten Antriebsmitteln mit einem Antriebsmotor (M2), einem an der Abtriebswelle (28) befestigten Zahnrad (30), einem Zahnrad (34), das mit dem Sekundärarm (S) über durch den Primärarm hindurch zum Sekundärarm verlaufende Verbindungsmittel (50) zum Antrieb des Sekundärarms unabhängig vom Primärarm gekuppelt ist, und einem endlosen flexiblen Treibelement (32), das die beiden Zahnräder miteinander verbindet,

dadurch gekennzeichnet, daß

die endlosen flexiblen Treibelemente der ersten und zweiten Antriebsmittel Zahnriemen (24, 32) sind,

den Zahnriemen erste und zweite einstellbar positionierte bidirektionale Riemenspannmittel (80) zur Steuerung der Spannung jedes der Riemen zugeordnet sind,

jede der bidirektionalen Riemenspannmittel ein U-förmiges Halteteil (87) mit zwei drehbaren Rollen (83, 85) aufweist, die an den beiden Enden des U-förmigen Halteteils befestigt sind und an der Außenfläche des zugeordneten Riemens (24 bzw. 32) anliegen,

jedes U-förmige Halteteil (87) mit Bezug auf das betreffende Abtriebswellenzahnrad (22 bzw. 30) verschiebbar positioniert ist, derart, daß das Zahnrad sich innerhalb des offenen Endes des U-förmigen Halteteils befindet, und

mit jedem U-förmigen Halteteil (87) Einstellmittel (92, 93) zur Positionierung des Halteteils relativ zu dem Zahnrad verbunden sind, um die Rollen (83, 85) gleichzeitig derart zu positionieren, daß sie gleichzeitig die Spannung auf dem betreffenden Riemen vergrößern oder verkleinern.

2. Antriebssystem nach Anspruch 1, dadurch gekennzeichnet, daß die endlosen Zahnriemen (24, 32) Elastomergummiriemen mit Stahldrahtkern sind.

3. Antriebssystem nach Anspruch 2, dadurch gekennzeichnet, daß die endlosen Zahnriemen (24, 32) eine Federsteifigkeit besitzen, die mit derjenigen der mechanischen Konstruktion des Handhabungsroboters vergleichbar ist.

4. Antriebssystem nach einem der Ansprüche 1 bis 3, dadurch gekennzeichnet, daß die Mittel zum Verbinden der zweiten Antriebsmittel mit dem Sekundärarm durch den Primärarm mit gegenseitigem Abstand angeordnete erste und zweite Zahnräder (56, 62) die in dem Primärarm (P) angeordnet sind, einen endlosen Zahnriemen zur Verbindung der Zahnräder und einstellbare bidirektionale Riemenspannmittel (100) aufweisen, die zwischen dem ersten und dem zweiten Zahnrad und innerhalb des Zahnriemens angeordnet sind und zwei Zahnrollen (102, 104) aufweisen, die jeweils mit einem gegenüberliegenden Trum des Zahnriemens zwischen erstem und zweitem Zahnrad in Eingriff stehen, und die Einstellmittel (114, 116) zum Einstellen der Riemenspannmittel zur Steuerung der Spannung des endlosen Zahnriemens aufweisen.

## Revendications

1. Système d'entraînement pour dispositif robotique de manipulateur ayant un bras primaire (P) pouvant tourner sur un socle de support dans un plan, et un bras secondaire (S) ayant une extrémité portée de manière à pouvoir tourner par l'extrémité dudit arbre primaire opposée audit socle pour tourner dans un autre plan décalé par translation dudit plan, le système d'entraînement comprenant:

a) un premier moyen d'entraînement comportant un moteur d'entraînement (M1), un pignon denté (22) fixé à l'arbre d'entraînement (20), un pignon denté (26) accouplé avec ledit bras primaire (P), et un organe souple d'entraînement sans fin (24) reliant lesdits deux pignons,

b) un second moyen d'entraînement comprenant un moteur d'entraînement (M2), un pignon denté (30) fixé à l'arbre d'entraînement (28), un pignon denté (34) accouplé avec ledit bras secondaire (S) par l'intermédiaire d'un moyen d'accouplement (50) s'étendant à travers ledit bras primaire jusqu'audit bras secondaire pour entraîner ledit bras secondaire indépendamment dudit bras primaire, et un organe souple d'entraînement sans fin (32) reliant lesdits deux pignons,

caractérisé en ce que

lesdits organes souples d'entraînement sans fin desdits premier et second moyens d'entraînement sont des courroies dentées (24, 32),

des premier et second moyens de tension bidirectionnelle (80) de courroies à positions réglables coopèrent avec lesdites courroies dentées pour commander la tension de chacune desdites courroies,

chacun desdits moyens de tension bidirectionnelle de courroies comporte un élément de support (87) en forme de U ayant deux galets rotatifs (83, 85) fixés à l'une et l'autre extrémités dudit élément de support en forme de U et venant au contact de la surface extérieure de la courroie (24 ou 32) correspondante,

chaque élément de support (87) en forme de U est disposé par coulissement par rapport au pignon (22 ou 30) d'arbre d'entraînement correspondant de telle sorte que ledit pignon se trouve dans l'extrémité ouverte dudit élément de support en forme de U, et

des moyens de réglage (92, 93) sont accouplés avec chaque élément de support (87) en forme de U pour disposer ledit élément de support par rapport audit pignon pour disposer simultanément lesdits galets (83, 85) afin d'accentuer ou de relâcher simultanément la tension sur la courroie correspondante.

2. Système d'entraînement selon la revendication 1, caractérisé en ce que lesdites courroies dentées sans fin (24, 32) sont des courroies en caoutchouc élastomère à câble interne en acier.

3. Système d'entraînement selon la revendication 2, caractérisé en ce que lesdites courroies dentées sans fin (24, 32) présentent une raideur de ressort comparable à celle de la structure mécanique dudit dispositif robotique de manipulateur.

4. Système d'entraînement selon l'une quelconque des revendications 1 à 3, caractérisé en ce que ledit moyen pour accoupler ledit second moyen d'entraînement audit bras secondaire par l'intermédiaire dudit bras primaire comporte un premier et un second pignons dentés (56, 62) espacés l'un de l'autre disposés sur ledit bras primaire (P) et une courroie dentée sans fin faisant coopérer lesdits pignons dentés, et un moyen de réglage de tension bidirectionnelle (100) de courroie intercalé entre lesdits premier et second pignons dentés et intérieur à ladite courroie dentée, ledit moyen de tension ayant deux galets dentés (102, 104) chacun au contact d'une longueur opposée de ladite courroie dentée s'étendant entre lesdits premier et second pignons dentés, et un moyen de réglage (114, 116) pour régler ledit moyen de tension de courroie pour commander la tension desdites courroies dentées sans fin.

FIG. 2

FIG. 1

CONTROL CONSOLE

FIG. 3

FIG . 4

FIG. 5

4

FIG. 6

EP 0 169 473 B1